(19) Europäisches Patentamt

European Patent Office

Office européen des brevets

(11) **EP 1 303 031 A2**

(12) **EUROPEAN PATENT APPLICATION**

(43) Date of publication:
**16.04.2003 Bulletin 2003/16**

(51) Int Cl.$^7$: **H02M 3/335**, H02M 3/28

(21) Application number: **02380209.3**

(22) Date of filing: **11.10.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (71) Applicant: **Salicru, S.A.**<br>**08460 Santa Maria de Palautordera (ES)** |
| (30) Priority: **15.10.2001 ES 200102274** | (72) Inventor: **Campas Raich, Jordi**<br>**08460 Santa Maria de Palautordera (ES)** |
| | (74) Representative: **Ponti Sales, Adelaida et al**<br>**C. Consell de Cent, 322**<br>**08007 Barcelona (ES)** |

(54) **Commutated electronic power converter**

(57)    It includes a magnetic core (1), at least two coils (2) wound around said core, at least one input port and one output port, each one of which includes a commutating device (3) and at least one voltage or current sensor, while the converter also includes means of control which, on the basis of the signals picked up at the sensor or sensors (3), provide the control signals for the commutating device (3). It is characterised in that the commutating devices (3) are bipolar and bi-directional, and the control means act on the bipolar and bi-directional commutating devices, providing four possible connections of each one of the coils. It presents great versatility in the transfer of energy from the power-supply ports to the load ports.

FIG. 1

**EP 1 303 031 A2**

**Description**

This invention relates to a commutated electronic power converter which has great versatility in the transfer of energy from one or more power-supply ports to one or more load gates.

BACKGROUND OF THE INVENTION

Since the early days of electricity applications the physical phenomenon known as electromagnetic induction has been used an electrical converter element.

In modern times there has been a proliferation of electronic converters based on the technique known as "commutation" which have recourse to high-frequency induction coils or transformers.

From the 1950s, with the emergence of silicon transistors, practical applications of commutation technology began be widely used.

One particular case of very wide use is that of indirect (or "flyback") commutated converters or power sources, which are direct current to direct current (DC/DC) converters.

These are electronic power converters which comprise a magnetic core, at least two coils wound around said core, at least one input port and one output port or a single input/output port, each of which includes a commutation device and at least one voltage or current sensor, while the converter also includes control means which, based on the signals picked up at the sensor or sensors, provide the control signals of the commutation device.

The coils and the magnetic core can consist in an induction coil or high-frequency transformer, which receives current pulses from the input. These pulses magnetise the core of the component, storing the energy in it in magnetic form. When the magnetisation stops the magnetic flow tends to disappear, inducing in the secondary (or secondaries) an electromotive force, which transfers the energy to the output (or outputs). If the amplitude of the input pulses is modulated (PWM: pulse-width modulation), the amount of energy transferred to the output is adjusted.

Also indirect converters are those known by the name of "boost" converters, among them step-up rectifiers with PFC (Power Factor Correction)(with DC output voltage greater than the maximum AC input voltage).

There have been developed to date many other electronic "commutation" converters, which use the direct ("forward") mode. In these, the output currents are the direct result of modulation. When recourse is had to an intermediate high-frequency transformer it is only for the purpose of adapting the input voltages to the output voltages (the magnetic core does not store the energy, but only transfers it directly).

The fact that the currents from the outputs are used in the forward direction of the modulation of the input means that it is essential to include always in the outputs an additional inductive filter to smooth the currents obtained in the modulation.

The following are typical forward-mode converters:

- "Forward" commutated DC/DC power-supply sources.
- Inverters (DC/AC converters) with pulse-width modulation (PWM) technology.

All the converters mentioned, both indirect and direct, are very widely used at present, and form the base or "building bricks" which permit the construction of complex converters by combining two or more of the simple converters.

Nowadays, simple converters such as UPS (Uninterrupted Power Supply) for alternating current (AC) or direct current (DC), battery chargers, DC/DC converters and others, must have recourse in their manufacture to the use of several conversions, transforming the electrical energy into an intermediate stage of direct or alternating current. This involves complexity, a multiplicity of transformers and induction coils and, as a result, low energy efficiency.

DESCRIPTION OF THE INVENTION

The commutated electronic power converter of the invention manages to resolve the aforesaid disadvantages.

The commutated electronic power converter of the invention is of the type which includes a magnetic core, at least two coils wound around said core, at least one input port and one output port or a single input/output port, each one of which includes a commutating device and at least one voltage or current sensor, while the converter also includes means of control which, on the basis of the signals picked up at the sensor or sensors, provide the control signals for the commutating device, and is characterised in that the commutating devices are bipolar and bi-directional, and the control means act on these bipolar and bi-directional commutating devices, providing four possible connections of each one of the coils:

- Connection with polarity of the coil coinciding with the polarity of an input, with magnetising current travelling in the direction of the input towards the coil.

- Connection with polarity of the coil opposite to the polarity of an input, with magnetising current travelling in the direction of the input towards the coil.
- Connection with polarity of the coil coinciding with the polarity of an output, with demagnetising current travelling in the direction of the coil towards the output.
- Connection with polarity of the coil opposite to the polarity of an output, with demagnetising current travelling in the direction of the coil towards the output.

Thanks to these characteristics great versatility is achieved, and all possible classes of converters can be achieved (AC/DC, AC/AC, DC/DC, and DC/AC), from one or several inputs and/or outputs, as described below in this description, and provided with new characteristics, such as:

- Use of a single magnetic component, even for so-far complex conversions.
- Possibility of obtaining "transparency" of the load currents (both of wave shape and of the reactive component) towards the power supply.
- Possibility of modification or correction of the wave shapes (harmonic) and reactive components of the alternating input and/or output currents.
- Possibility of connecting in parallel like outputs of different converters.

Furthermore, the converter of the invention permits conversion of electrical energy with the following advantages:

- Circulation of energy from one port to others (even of alternating current) in a single conversion.
- Behaviour as a source of current, which provides ease of connection in parallel of two or more devices.
- Galvanic isolation between the various ports.
- Voltage ratios adaptable between the different ports.
- Saving of components, especially electromagnetic components.
- Low weight and volume.

The commutations are effected by pulses at very short intervals (at high frequencies of, for example, 100 kHz). They take place in the following way:

A first action in which the corresponding coil is connected to a magnetising port up to transfer to the common core of the energy needed at that time at the output ports.

A response to the foregoing action in which the coils of the demagnetising ports are connected. The energy of the magnetic field stored in the previous action is recovered at these ports, in the form of electromotive power capable of impelling the output (or recovery) currents.

With this double commutation energy is transferred from some ports to others, as suitable, in order to adjust the voltage and current values of all the ports to the previously established set values.

In the converter of the invention, the magnetising polarity of the core keeps always the same sign. The commutating devices of each port, by means of the strategy of control, connect the input and/or output to the correct electric polarity in order to obtain the magnetisation or demagnetisation with this same polarity in every moment.

The use of bipolar and bi-directional commutating devices at all the ports permits the transfer of energy (via magnetic core) from one power-supply or storage port to one or more load ports, and transfer of the reactive or harmonic currents in the opposite direction.

The ports can work with alternating or direct current.

Each converter includes at least one input port and one output port, there being no restrictions on the total number of input and/or output ports.

Some embodiments can also include a temporary storage port. For example, those which must bear non-linear or reactive loads without their affecting the inputs, or those which must supply instantaneous power without zeros (multiphase mains) from pulsing instantaneous power (single-phase mains). The temporary storage ports are input/output ports whose load consists in a bank of capacitors.

The basic notions of the indirect or "flyback" converter can be summed up as follows:

The converter transfers the energy from the input to the output by means of an intermediate stage of the latter in magnetic form, which is stored in the core of the transformer. This storage is carried out in "packets" of short duration, for a maximum time of half the modulation period.

The maximum energy of each packet is in accordance with the formula:

$$E_{mag} \text{ (J)} = \frac{1}{2} L I^2$$

and the average power transferable in direct form:

$$P_{mag} \text{ (W)} = E_{mag} \, f / 2 = \tfrac{1}{4} \, L \, I^2 \, f$$

where **L** is the inductance of the primary in henrys, **I** the maximum current in amperes and **f** the modulation frequency in hertz.

With high commutation frequencies a notable amount of power can be converted.

In a practical case where L = 1 mH I = 10 A and f = 100 kHz, the following obtains:

$$P_{mag} = \tfrac{1}{4} \, L \, I^2 \, f = \tfrac{1}{4} \, 1 \cdot 10^{-3} \cdot 10^2 \cdot 100 \cdot 10^3 = 2500 \text{ watts}$$

The transformer of such a converter weighs less than 1 kg.

Furthermore, and in a like manner, a quantity of electrical energy can be stored temporarily in the form of an electrical field in a capacitor.

The energy stored is given by:

$$E_{e1} \text{ (J)} = \tfrac{1}{2} \, C \, (U_2^2 - U_1^2)$$

and the power stored for 20 ms (period of the alternating current of 50 Hz):

$$P_{e1} \text{ (W)} = E_{e1} / t = \tfrac{1}{2} \, C \, (U_2^2 - U_1^2) / 20 \cdot 10^{-3}$$

where **C** is the capacitance of the capacitor in farads, **U_2** the final voltage and **U_1** the initial voltage, both in volts.

As an example, for C = 1000 μF, U_2 = 400 V and U_1 = 100 V,

$$P_{e1} = \tfrac{1}{2} \, 1000 \cdot 10^{-6} \, (400^2 - 100^2) / 20 \cdot 10^{-3} = 3750 \text{ W}$$

A typical capacitor of 1000 μF 400 V which occupies a volume of some 80 cm$^2$ (cube with edge of 4.3 cm) is capable of storing temporarily the energy corresponding to 3750 W over a 50 Hz cycle under the conditions stated. It can as a result absorb and supply, cycle by cycle, a component of reactive current or of harmonic currents of a reactive or non-linear load of the same order of magnitude as the aforesaid power.

The converter of the invention also has other characteristics.

Advantageously, the magnetic core includes a magnetic flow sensor which provides the control means with information on the degree of magnetic saturation of the core. Said sensor can consist in a Hall-effect device or a simple additional winding.

The commutating devices can be of different structures. In the case of a coil with centre-tap connection the bipolar and bi-directional commutating device includes a pair of diodes each connected in series with a transistor between one of the ends of the coil and one of the poles of the input/output port, with the diodes and the transistors being mounted in the opposite direction. In the case of a simple coil, the bipolar and bi-directional commutating device includes four diodes in bridge configuration and four transistors connected in series to each of the diodes.

Furthermore, in relation to the sensors, the converter of the invention can include, in addition to the sensors included in the ports, at least another auxiliary sensor.

The means of control include a micro-controller, which determines the commutating priorities of the ports, a non-volatile memory, a power-supply circuit and the corresponding input and output circuits.

In addition to the program routines, the micro-controller keeps saved in its non-volatile memory the set values of each port assigned to each input and/or output of the converter and, in particular, those which are to be obtained un the converter.

Comparison of these set values with the values in real time of the respective ports shows the surpluses or shortfalls of energy at each port.

On the basis of this information the microprocessor, in a multiple servo-control regulation action (with one more several regulating loops, according to the type of converter), actuates suitably the commutating devices of each port in order to carry out the energy transfers necessary at any given moment. This tends to cancel out the value of the initial deviations obtained from the aforesaid comparison, between the set value and the real value of each regulating loop.

On a particular converter the values obtained from auxiliary sensors or detectors (other than those of the ports) can be used as set values or real values.

The microprocessor is also assigned other tasks (some only optional), such as the ordered start-up process, temperature control of the power semiconductors and transformer of the converter, monitoring for anomalous conditions, outgoing communication of parameter measures, information about incidents (historical), etc., and incoming communications: start-stop, information requests, etc.

Thanks to the characteristics of the invention, with suitable ports structure and programming of the control means, numerous converters can be implemented, which was complex so far, with a single inductive component. There is a description below of some of these converters, without that descriptive listing being in any way restricted to them.

BRIEF DESCRIPTION OF THE DRAWINGS

For a better understanding of all that has been outlined some drawings are attached which show, schematically and solely by way of non-restrictive example, several practical cases of embodiment.

In said drawings, Figure 1 is a schematic diagram of the commutated electronic power converter of the invention; Figure 2 shows the various connections made by the commutating devices between inputs, outputs and coils; Figures 3 and 4 are embodiments of the bipolar and bi-directional commutating devices used in the converter of the invention; Figure 5 is a schematic diagram of the control means and Figures 6 to 16 are different embodiments of the converter of the invention.

DESCRIPTION OF PREFERRED EMBODIMENTS

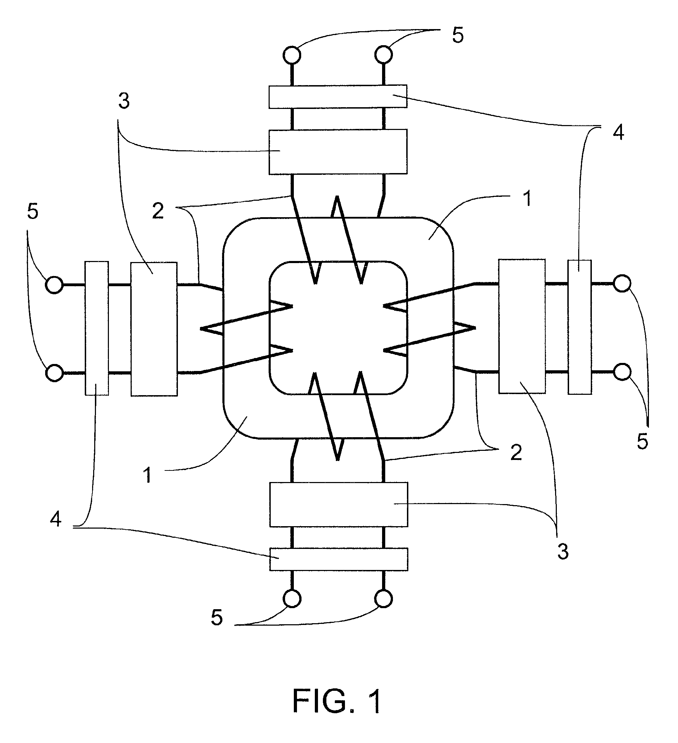

As shown in Figure 1, the commutated electronic power converter object of the invention includes a magnetic core 1, four coils 2 wounds around said core, four input/output ports, each one of which includes a commutating device 3 and a voltage or current sensor 4. Each port also includes its respective terminals 5.

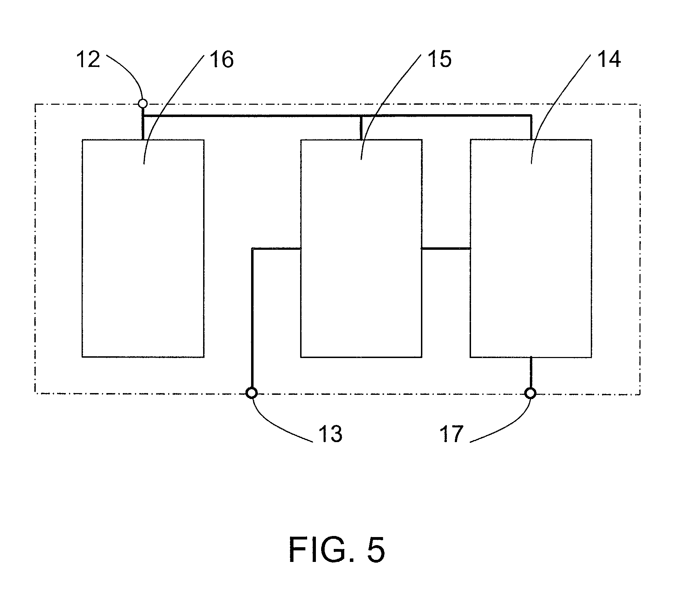

The converter also includes control means, shown in Figure 5, which on the basis of the signal picked up in the sensors provide the control signals for the commutating devices.

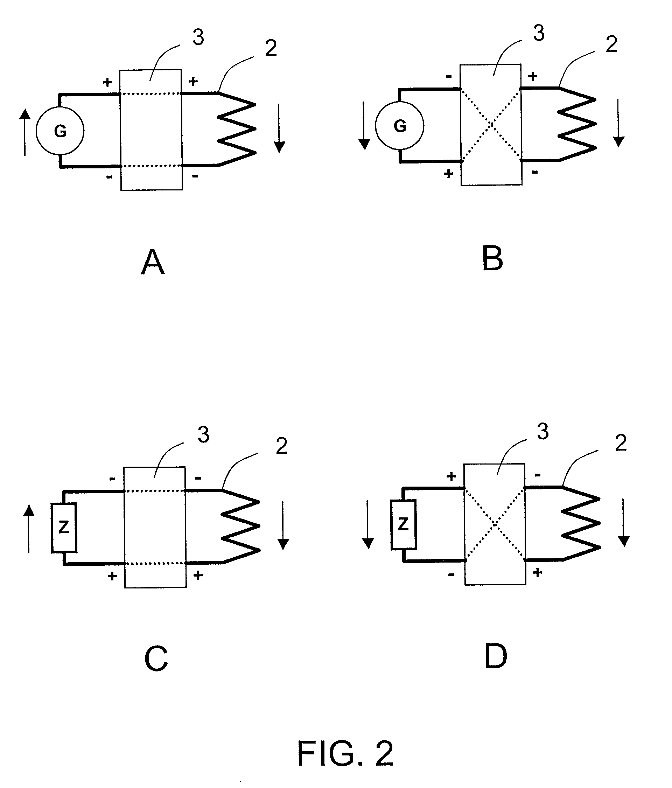

As stated above, the commutating device 3 is bipolar and bi-directional and the controls means act on the bipolar and bi-directional commutating device to provide four possible connections of the coil 2, shown in Figure 2, where G represents an e.m.f. and $Z_2$ an impedance:

- Connection with polarity of the coil 2 coinciding with the polarity of an input, with magnetising current travelling in the direction of the input towards the coil 2 (diagram A).
- Connection with polarity of the coil 2 opposite to the polarity of an input, with magnetising current travelling in the direction of the input towards the coil 2 (diagram B).
- Connection with polarity of the coil 2 coinciding with the polarity of an output, with demagnetising current travelling in the direction of the coil 2 towards the output (diagram C).
- Connection with polarity of the coil 2 opposite to the polarity of an output, with demagnetising current travelling in the direction of the coil 2 towards the output (diagram D).

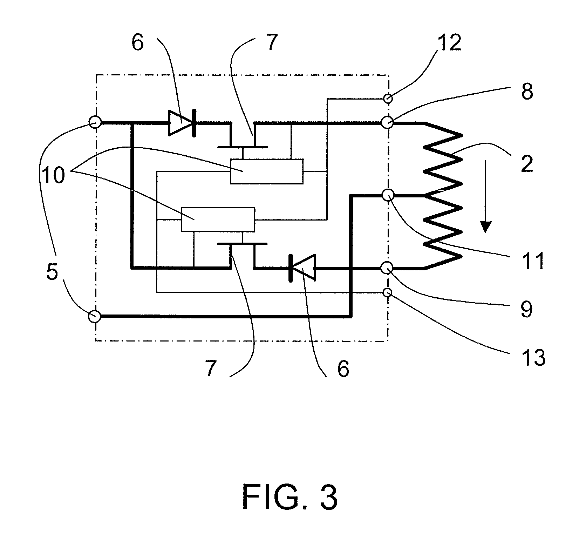

As shown in Figure 3, in the case of a coil with centre-tap connection, the bipolar and bi-directional commutating device includes a pair of diodes 6, each one of which is connected in series to a transistor 7 between one of the ends 8 and 9 of the coil 2 and one of the poles 5 of the input/output port, with the diodes 6 and the transistors 7 being arranged on each branch in opposite direction. Reference number 10 designates the drivers of the transistors, reference number 11 the centre-tap connection terminal of the coil, reference number 12 the power-supply bus of the drivers 10 and reference number 12 the commutation data bus.

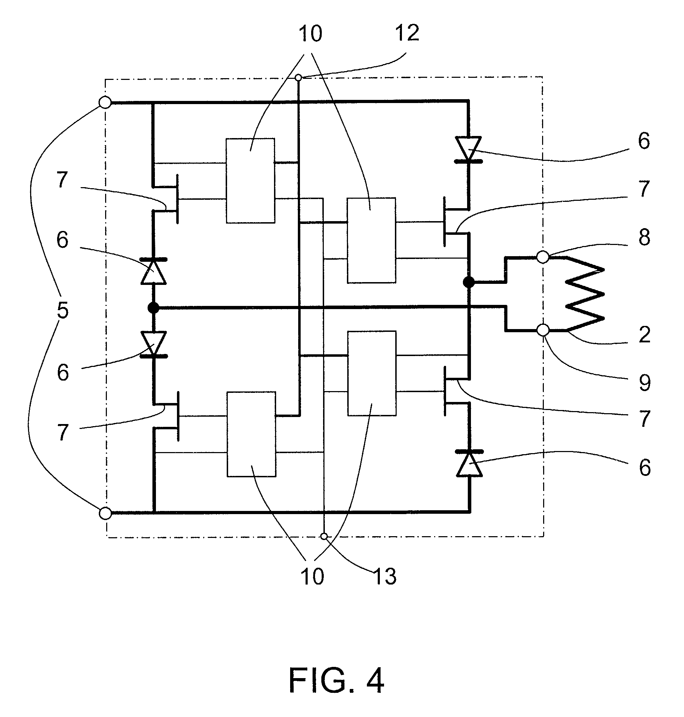

As shown in Figure 4, in the case of a simple coil the bipolar and bi-directional commutating device includes four diodes 6 in bridge configuration and four transistors 7 connected in series to each one of the diodes 6.

As can be seen in Figure 5, the control means include a micro-controller 14, which determines the commutation priorities of the ports, a non-volatile memory 15, a power-supply circuit 16 and the corresponding input and output circuits. Reference number 12 pertains to the power-supply buses, reference number 13 pertains to the commutation data buses and reference number 17 to the data input buses of the sensors.

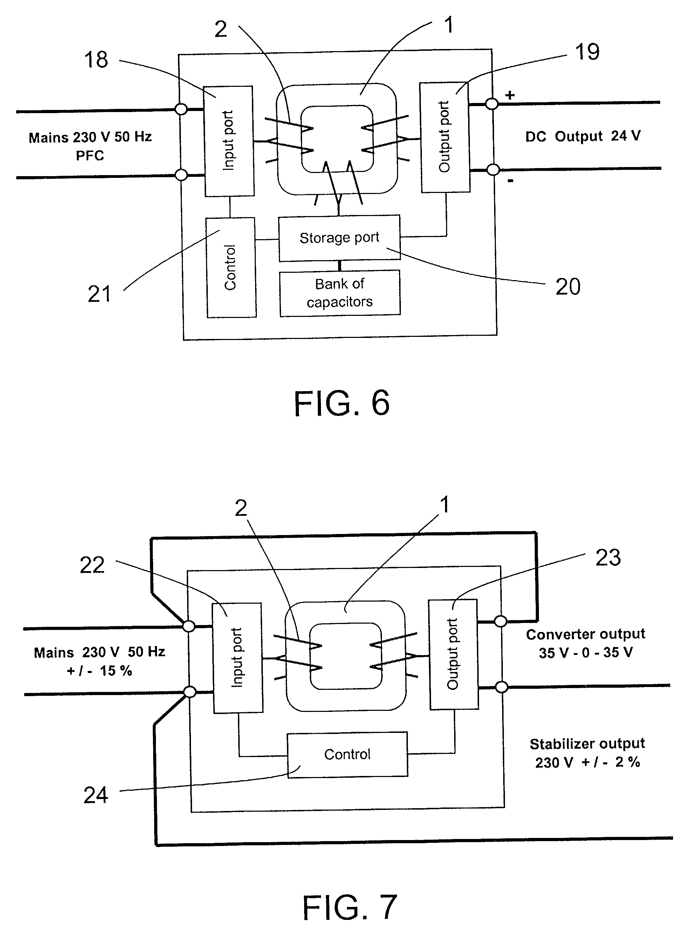

According to one embodiment, shown in Figure 6, the converter of the invention includes an alternating current input port 18, a direct current output port 19 for the load and a storage port 20, for compensating the harmonic and reactive currents, with the aforesaid three ports connected to three independent coils 2 wound around a single core 1 and provided with control means which act on the bipolar and bi-directional commutating devices 3 in such a way that the converter functions as an AC/DC power supply with correction of the power factor at the input.

According to one embodiment, shown in Figure 7, the converter of the invention includes an alternating current mains input port 22, an alternating current output port 23, for supplying the correcting voltage and current, the aforesaid two ports being connected to two independent coils 2 wound around a single core 1 and provided with control means 24 which act on the bipolar and bi-directional commutating devices 3 in such a way that the converter functions as an AC voltage stabiliser.

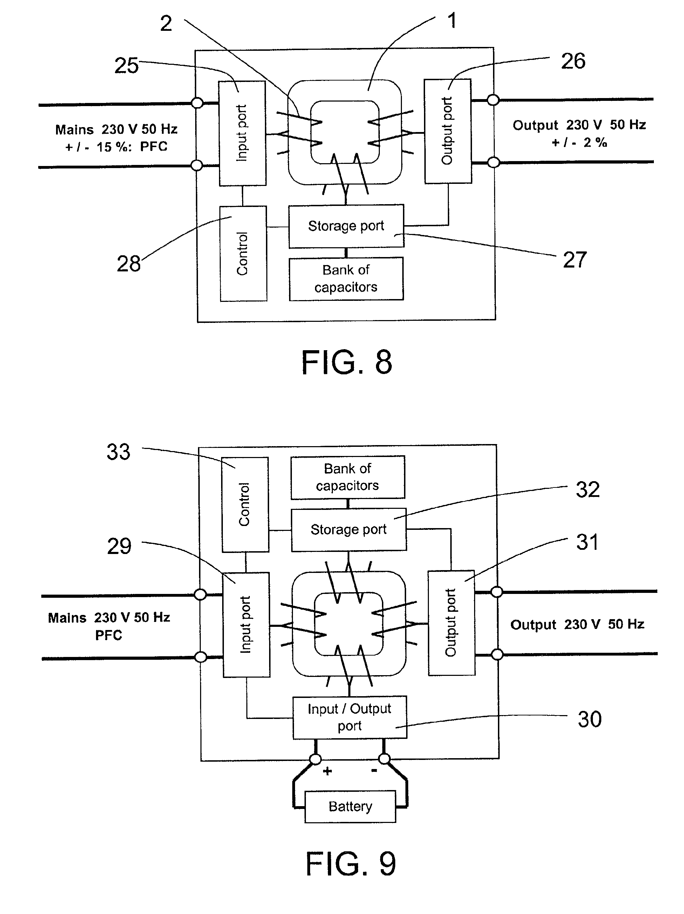

According to one embodiment, shown in Figure 8, the converter of the invention includes an alternating current mains input port 22, an alternating current output port, for the load, a storage port 27, for compensating the harmonic and reactive currents, with the aforesaid three ports connected to three independent coils 2 wound around a single core and provided with control means 28 which act on the bipolar and bi-directional commutating devices 3 in such a way that the converter functions as an AC voltage stabiliser, with correction of the power factor at the input and galvanic insulation.

According to one embodiment, shown in Figure 9, the converter of the invention includes an alternating mains current input port 29, a direct current output or input port 30, for a battery, with the input/output function of the port changing according to whether or not the input mains is providing energy, an alternating current output port 31, for an uninterrupted supply, and a storage port 32, for compensating the harmonic and reactive currents of the loads, with the aforesaid four ports being connected to four independent coils 2 wound around a single core 1, and being provided with control means 33 which act on the bipolar and bi-directional commutating devices in such a way that the converter functions as an UPS, with input at correction of the power factor.

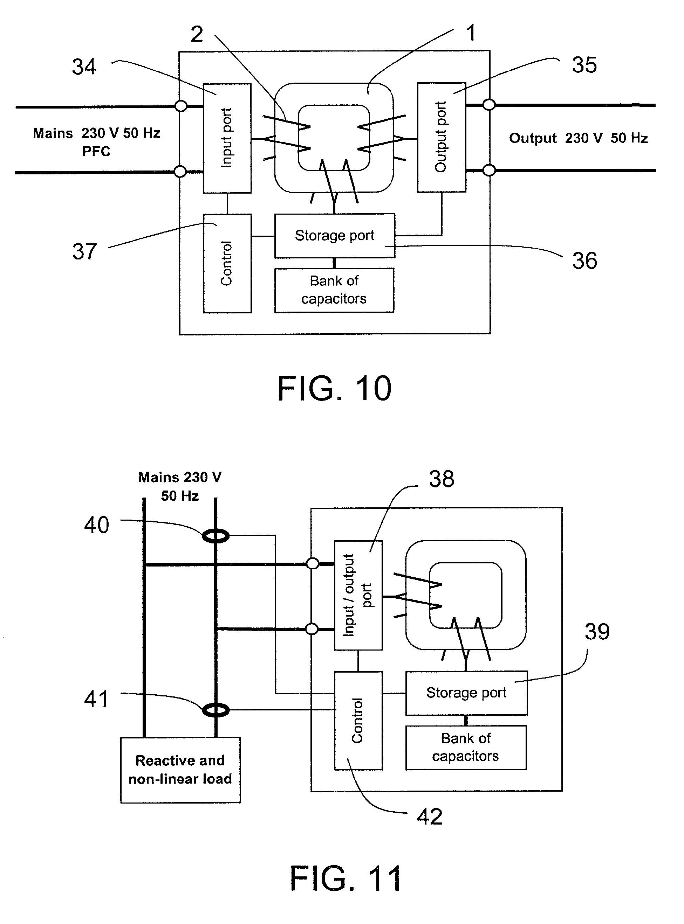

According to one embodiment, shown in Figure 10, the converter of the invention includes an alternating current input port 34, an alternating current output port 35, for a non-linear load, a storage port 36, for compensating the harmonic and reactive currents, with the aforesaid three ports connected to three independent coils 2 wound around a single core 1 and provided with control means 37 which act on the bipolar and bi-directional commutating devices 3 in such a way that the converter functions as an insulating transformer / active filter.

According to one embodiment, shown in Figure 11, the converter of the invention includes an alternating current input/output port 38 for supplying the correcting current, a storage port 39, for supplying the harmonic and reactive currents and two current sensors 40 and 41 provided at the input mains, with the two aforesaid ports connected to two independent coils 2 wound on a single core 1 and provided with control means 42 which act on the bipolar and bi-directional commutating devices in such a way that the converter functions as an active correcting filter to compensate reactive and non-linear loads.

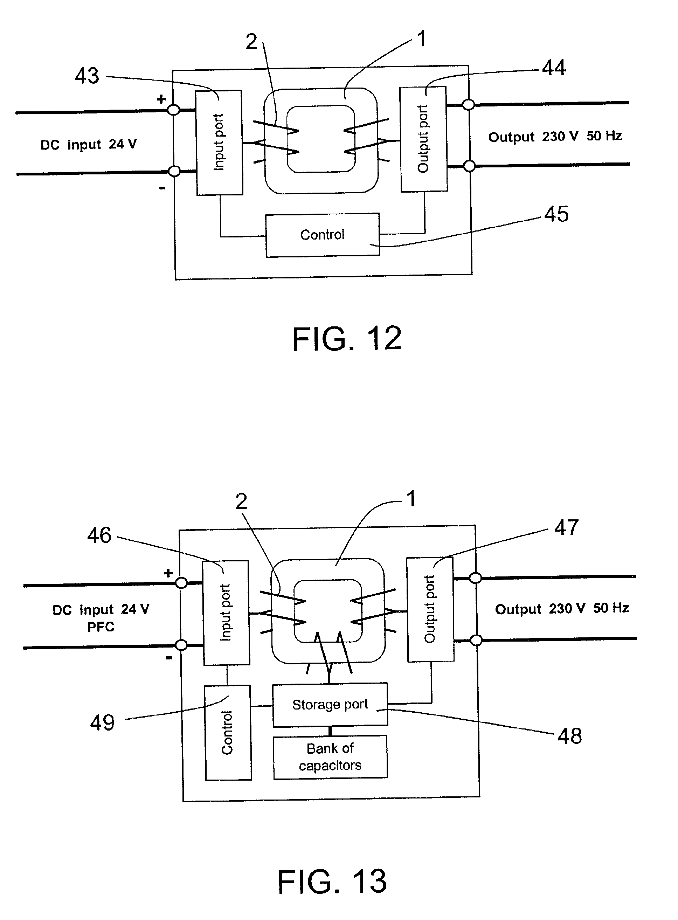

According to one embodiment, shown in Figure 12, the converter of the invention includes a direct current input port 43, an alternating current output port 44, for the load, with the aforesaid two ports connected to two independent coils 2 wound on a single core 1 and provided with control means 45 which act on the bipolar and bi-directional commutating devices in such a way that the converter functions as an inverter.

According to one embodiment, shown in Figure 13, the converter of the invention includes a direct current battery input port 46, an alternating current output port 47, for the load, and a storage port 48, for compensating the harmonic and reactive currents, with the three aforesaid ports connected to three independent coils 2 wound around a single core 1 and provided with control means 49 which act on the bipolar and bi-directional commutating devices in such a way that the converter functions as an inverter with active filter of harmonic and non-linear load currents.

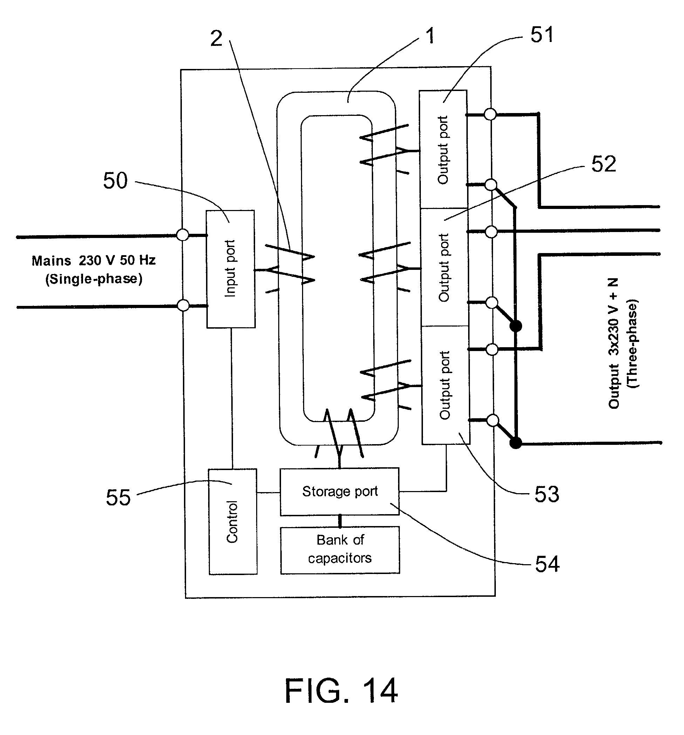

According to one embodiment, shown in Figure 14, the converter of the invention includes an alternating current input port 50, for connecting to the single-phase power supply mains, three alternating current output ports 51, 52, 53, for a three-phase load, and a storage port 54, for complementing the pulsing power from the input and supplying the direct multiphase power of the outputs during the passing through zero of the input voltage, with the five aforesaid ports connected to five independent coils 2 wound around a single core 1 and provided with control means 55 which act on the bipolar and bi-directional commutating devices in such a way that the converter functions as mains system transformer, from single-phase to three-phase.

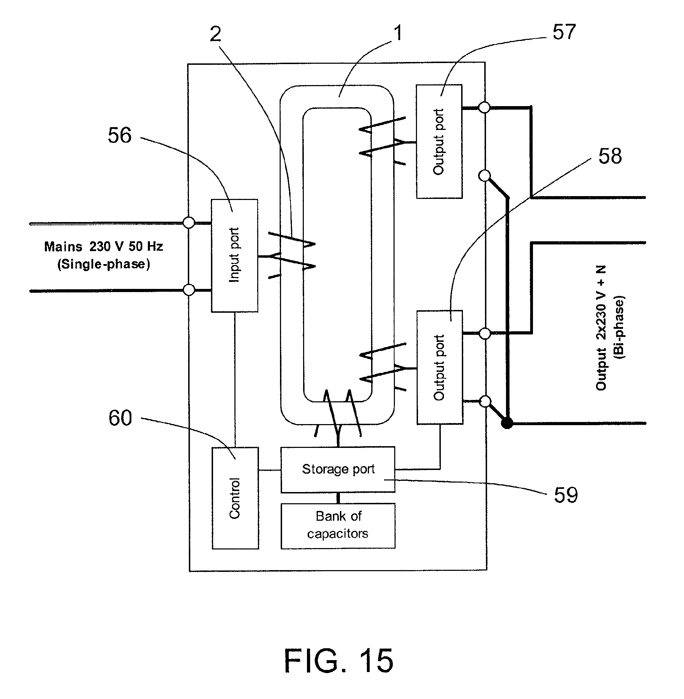

According to one embodiment, shown in Figure 15, the converter of the invention includes an alternating current input port 56, for connecting to the single-phase power supply mains, two alternating current output ports 57, 58, for a bi-phase load, a storage port 59, for complementing the pulsing power from the input and supplying the direct multiphase power of the outputs, with the four aforesaid ports connected to four independent coils 2 wound around a single core 1 and provided with control means 60 which act on the bipolar and bi-directional commutating devices in such a way that the converter functions as a mains system transformer, from single-phase to bi-phase.

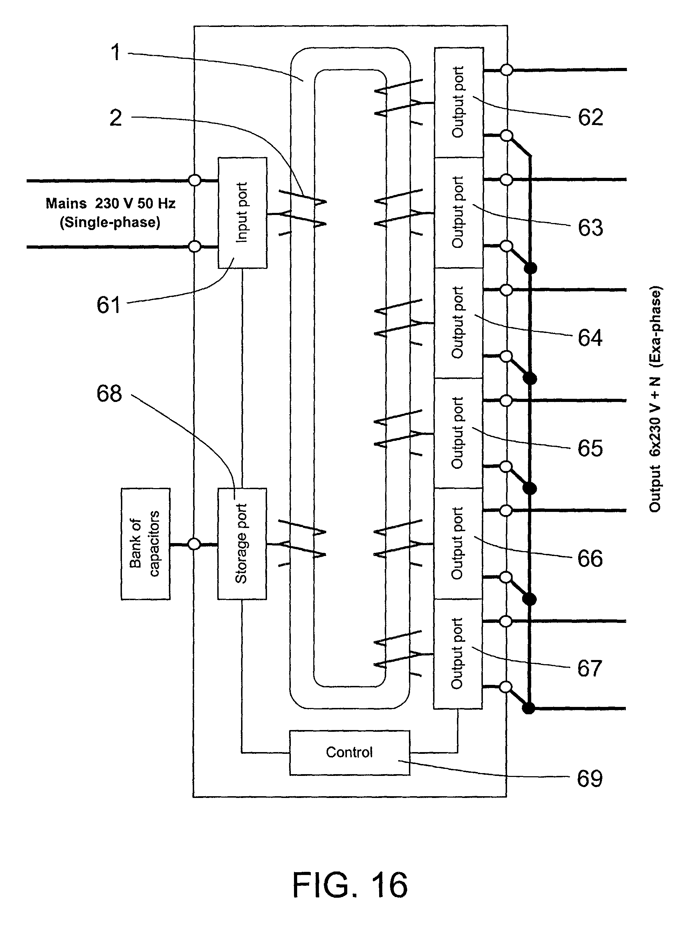

According to one embodiment, shown in Figure 16, the converter of the invention includes an alternating current input port 61, for connecting to the single-phase power supply mains, six alternating current output ports 62 to 67, for exa-phasic load, and a storage port 68, for complementing the pulsing power from the input and supplying the direct multiphase power of the outputs, with the eight aforesaid ports connected to eight independent coils 2 wound around a single core 1 and provided with control means 69 which act on the bipolar and bi-directional commutating devices in such a way that the converter functions as mains system transformer, from single-phase to exa-phasic.

**Claims**

1. Commutated electronic power converter, which includes a magnetic core (1), at least two coils (2) wound around said core (1), at least one input port and one output port or a single input/output port, each one of which includes a commutating device (3) and at least one voltage or current sensor (4), while the converter also includes means of control which, on the basis of the signals picked up at the sensor or sensors (3), provide the control signals for the commutating device (4), **characterised in that** the commutating devices (4) are bipolar and bi-directional, and the control means act on the bipolar and bi-directional commutating devices (3), providing four possible connections of each one of the coils (2):

   - Connection with polarity of the coil (2) coinciding with the polarity of an input, with magnetising current travelling in the direction of the input towards the coil (2).
   - Connection with polarity of the coil (2) opposite to the polarity of an input, with magnetising current travelling in the direction of the input towards the coil (2).
   - Connection with polarity of the coil (2) coinciding with the polarity of an output, with demagnetising current travelling in the direction of the coil (2) towards the output.
   - Connection with polarity of the coil (2) opposite to the polarity of an output, with demagnetising current travelling in the direction of the coil (2) towards the output.

2. Converter as claimed in Claim 1, **characterised in that** the magnetic core (1) includes a magnetic flow sensor which provides the control means with information on the degree of magnetic saturation of the core (1).

3. Converter as claimed in Claim 2, **characterised in that** the magnetic flow sensor includes a Hall-effect device.

4. Converter as claimed in Claim 2, **characterised in that** the magnetic flow sensor includes an additional winding.

5. Converter as claimed in Claim 1, **characterised in that**, in the case of a coil (2) with centre-tap connection (11), the bipolar and bi-directional commutating devices (3) include a pair of diodes (6) each connected in series with a transistor (7) between one of the ends (8,9) of the coil (2) and one of the poles (5) of the input/output port, with the diodes (6) and the transistors (7) being mounted in the opposite direction.

6. Converter as claimed in Claim 1, **characterised in that**, in the case of a simple coil (2), the bipolar and bi-directional commutating devices (3) include four diodes (6) in bridge configuration and four transistors (7) connected in series to each of the diodes (6).

7. Converter as claimed in Claim 1, **characterised in that** it includes, in addition to the sensors included in the ports, at least another auxiliary sensor (40, 41).

8. Converter as claimed in Claim 1, **characterised in that** the means of control include a micro-controller (14), which determines the commutating priorities of the ports, a non-volatile memory (15), a power-supply circuit (16) and the corresponding input and output circuits.

9. Converter as claimed in any of Claims 1 to 4, **characterised in that** includes an alternating current input port (18), a direct current output port (19) for the load and a storage port (20), for compensating the harmonic and reactive currents, with the aforesaid three ports connected to three independent coils (2) wound around a single core (1), and **in that** the control means (21) act on the bipolar and bi-directional commutating devices (3) in such a way that the converter functions as an AC/DC power supply with correction of the power factor at the input.

10. Converter as claimed in any of Claims 1 to 4, **characterised in that** it includes an alternating current mains input port (22), an alternating current output port (23), for supplying the correcting voltage and current, the aforesaid two ports being connected to two independent coils (2) wound around a single core (1), and **in that** the control means (24) act on the bipolar and bi-directional commutating devices (3) in such a way that the converter functions as an AC voltage stabiliser.

11. Converter as claimed in any of Claims 1 to 4, **characterised in that** it includes an alternating current mains input port (22), an alternating current output port (26), for the load, a storage port (27), for compensating the harmonic and reactive currents, with the aforesaid three ports connected to three independent coils (2) wound around a single core (1), and **in that** the control means (28) act on the bipolar and bi-directional commutating devices (3)

in such a way that the converter functions as an AC voltage stabiliser, with correction of the power factor at the input and galvanic insulation.

**12.** Converter as claimed in any of Claims 1 to 4, **characterised in that** it includes an alternating mains current input port (29), a direct current output or input port (30), for a battery, with the input/output function of the port changing according to whether or not the input mains is providing energy, an alternating current output port (31), for an uninterrupted supply, and a storage port (32), for compensating the harmonic and reactive currents of the loads, with the aforesaid four ports being connected to four independent coils (2) wound around a single core (1), and **in that** the control means (33) act on the bipolar and bi-directional commutating devices in such a way that the converter functions as an UPS, with input at correction of the power factor.

**13.** Converter as claimed in any of Claims 1 to 4, **characterised in that** it includes an alternating current input port (34), an alternating current output port (35), for a non-linear load, a storage port (36), for compensating the harmonic and reactive currents, with the aforesaid three ports connected to three independent coils (2) wound around a single core (1), and **in that** the control means (37) act on the bipolar and bi-directional commutating devices (3) in such a way that the converter functions as an insulating transformer / active filter.

**14.** Converter as claimed in any of Claims 1 to 4, **characterised in that** it includes an alternating current input/output port (38) for supplying the correcting current, a storage port (39), for supplying the harmonic and reactive currents and two current sensors (40, 41) provided at the input mains, with the two aforesaid ports connected to two independent coils (2) wound on a single core (1), and **in that** the control means (42) act on the bipolar and bi-directional commutating devices (3) in such a way that the converter functions as an active correcting filter to compensate reactive and non-linear loads.

**15.** Converter as claimed in any of Claims 1 to 4, **characterised in that** it includes a direct current input port (43), an alternating current output port (44), for the load, with the aforesaid two ports connected to two independent coils (2) wound on a single core (1), and **in that** the control means (45) act on the bipolar and bi-directional commutating devices (3) in such a way that the converter functions as an inverter.

**16.** Converter as claimed in any of Claims 1 to 4, **characterised in that** it includes a direct current battery input port (46), an alternating current output port (47), for the load, and a storage port (48), for compensating the harmonic and reactive currents, with the three aforesaid ports connected to three independent coils (2) wound around a single core (1), and **in that** the control means (49) act on the bipolar and bi-directional commutating devices (3) in such a way that the converter functions as an inverter with active filter of harmonic and non-linear load currents.

**17.** Converter as claimed in any of Claims 1 to 4, **characterised in that** it includes an alternating current input port (50), for connecting to the single-phase power supply mains, three alternating current output ports (51,52,53) for a three-phase load, and a storage port (54), for complementing the pulsing power from the input and supplying the direct multiphase power of the outputs during the passing through zero of the input voltage, with the five aforesaid ports connected to five independent coils (2) wound around a single core (1), and **in that** the control means (55) act on the bipolar and bi-directional commutating devices (3) in such a way that the converter functions as mains system transformer, from single-phase to three-phase.

**18.** Converter as claimed in any of Claims 1 to 4, **characterised in that** it includes an alternating current input port (56), for connecting to the single-phase power supply mains, two alternating current output ports (57,58) for a bi-phase load, a storage port (59), for complementing the pulsing power from the input and supplying the direct multiphase power of the outputs, with the four aforesaid ports connected to four independent coils (2) wound around a single core (1), and **in that** the control means (60) act on the bipolar and bi-directional commutating devices (3) in such a way that the converter functions as a mains system transformer, from single-phase to bi-phase.

**19.** Converter as claimed in any of Claims 1 to 4, **characterised in that** it includes an alternating current input port (61), for connecting to the single-phase power supply mains, six alternating current output ports (62, 63, 64, 65, 66, 67), for exa-phasic load, and a storage port (68), for complementing the pulsing power from the input and supplying the direct multiphase power of the outputs, with the eight aforesaid ports connected to eight independent coils (2) wound around a single core (1), and **in that** the control means (69) act on the bipolar and bi-directional commutating devices (3) in such a way that the converter functions as mains system transformer, from single-phase to exa-phasic.

FIG. 1

FIG. 2

FIG. 3

FIG. 4

**FIG. 5**

18    2    1    19

Mains 230 V 50 Hz
PFC

Input port

Storage port

Bank of
capacitors

Control

21    20

DC Output  24 V

+

−

## FIG. 6

22    2    1    23

Mains  230 V  50 Hz
+ / − 15 %

Input port

Output port

Control

24

Converter output
35 V − 0 − 35 V

Stabilizer output
230 V  + / − 2 %

## FIG. 7

2

1

25

26

Input port

Output port

Mains 230 V 50 Hz
+ / - 15 %: PFC

Output 230 V 50 Hz
+ / - 2 %

Control

Storage port

28

27

Bank of
capacitors

## FIG. 8

33

Bank of
capacitors

Control

32

Storage port

29

31

Input port

Output port

Mains 230 V 50 Hz
PFC

Output 230 V 50 Hz

Input / Output
port

30

+   -

Battery

## FIG. 9

**FIG. 10**

**FIG. 11**

## FIG. 12

**43** — Input port

**2** — **1**

**44** — Output port

DC input 24 V

Output 230 V 50 Hz

Control **45**

## FIG. 12

## FIG. 13

**46** — Input port

**2** — **1**

**47** — Output port

DC input 24 V PFC

Output 230 V 50 Hz

**49** — Control

Storage port — **48**

Bank of capacitors

## FIG. 13

FIG. 14

FIG. 15

FIG. 16